# EUROPEAN PATENT SPECIFICATION

(11) **EP 1 429 861 B1**
(45) Date of publication and mention of the grant of the patent: **18.04.2012**
(21) Application number: 02759735.0
(22) Date of filing: 19.09.2002
(51) Int. Cl.: B01D 63/08, B01D 65/00

(54) **FILTRATION MODULE**
FILTERMODUL
MODULE DE FILTRATION

(30) Priority: 20.09.2001 US 323596 P
(43) Date of publication of application: 23.06.2004
(73) Proprietor: EMD Millipore Corporation, Billerica MA 01821 (US)
(72) Inventor: PEARL, Steven, R., Nashua, NH 03062 (US); CHISHOLM, Mark, E., Arlington, MA 02474 (US); MERRILL, Wayne S., Derry, NH 03038 (US)
(74) Representative: Henkel, Breuer & Partner
(86) International application number: PCT/US2002/029815
(87) International publication number: WO 2003/024574

(56) References cited:
- WO-A-00/78429
- WO-A-01/24915
- DE-U- 29 618 092
- GB-A- 2 112 293
- GB-A- 2 302 042
- US-A- 4 576 715
- PATENT ABSTRACTS OF JAPAN vol. 012, no. 096 (C-484), 29 March 1988 (1988-03-29) & JP 62 227417 A (TSUCHIYA MFG CO LTD), 6 October 1987 (1987-10-06)

## Description

This invention relates to a membrane filtration apparatus for effecting filtration of a liquid composition wherein a feed liquid is introduced into the apparatus and a filtrate stream and, optionally a retentate stream are removed from the apparatus. More particularly, this invention relates to a tangential flow membrane filtration apparatus or dead ended membrane filtration apparatus that is formed and selectively sealed by injection molding and indirect heat sealing of a polymeric composition.

### BACKGROUND OF THE INVENTION

Prior to the present invention, liquids have been filtered within a plurality of filter modules that are stacked between manifolds or individually sealed to a manifold plate. Each module includes a one or more filter layers separated by appropriate number of spacer layers, such as screens, to permit liquid feed flow into the apparatus as well as filtrate flow from the apparatus. Filtration within the module can be conducted as a tangential flow filtration (TFF) process wherein incoming feed liquid is flowed tangentially over a membrane surface to form a retentate and a filtrate. Alternatively, filtration can be conducted as a dead end mode otherwise identified as normal flow filtration (NFF) wherein all incoming feed liquid is passed through a membrane filter with retention of solids and other debris on the membrane filter. In this latter mode only a filtrate is recovered.

At the present time, a filtrate stream is sealed from a feed stream within a membrane filtration apparatus by sealing techniques utilizing potting adhesives such as epoxies, urethanes or silicones, solvent bonding or direct heat sealing. In the case of a tangential flow filtration apparatus, a filtrate stream is sealed from a feed stream and a retentate stream. Adhesives are undesirable since they have limited chemical compatibility, are a source of significant extractable species, limits the ability to utilize all of the given volume in a filter unit as the adhesives take up a given volume of area in the device, introduce process control difficulties, impose bond strength limitations, impose use temperature limitations, and increase process cycle time. Direct heat sealing wherein a heating element contacts a material that flows to form a seal is undesirable since its use imposes a minimal limitation upon the thickness of the material being heat sealed. This results in a reduction of the number of layers that can be present in a given volume of the filtration module, thereby undesirably reducing the filtration capacity of the module. In addition, direct heat sealing is undesirable because it requires multiple steps, imposes material compatibility limitations, and typically utilizes a substrate to effect direct heat sealing of filtration elements and can cause membrane damage. Solvent bonding is undesirable since solvents impose environmental issues and process variability while potentially useful polymers are limited by their solvation characteristics.

In addition, the use of materials such as polysilicone or polyurethane based materials which absorb and/or adsorb a portion of a feed fluid being filtered is undesirable since the absorbed material will desorb into subsequently filtered materials and contaminate them.

U.S. Patent 5,429,742 discloses a filter cartridge comprising a thermoplastic frame into which are molded a plurality of filtration membranes. The thermoplastic frame is molded to provide fluid pathways that assure incoming fluid to be filtered will be passed through a membrane prior to removing filtered fluid from the filter cartridge. The frame is sufficiently thick so that fluid pathways to and from the membranes can be formed. Since adjacent membranes are separated by relatively thick spacer members, membrane area per unit volume of the filter cartridge is undesirably low.

WO 00/24915 A discloses a filtration apparatus for TFF or NF filtration which is made up of a stack of filter layers and screens and which respectively are provided with one or more openings forming ports. The openings of the screen have a sealing gasket made of elastomeric material molded along the peripheral edges thereof and the gasket has a thickness greater than that of the screen such that the gasket extends above at least one side of the screens.

US-A-4576715 discloses a membrane pack which includes a porous carrier sandwiched between a pair of membrane structures. The pack has a hole and is sealed around the hole to prevent the passage of polluting liquid into the carrier. The membrane pack is constructed by impregnating the carrier with a flowable polymer which can solidify to leave a thin layer of the polymer on either surface of the carrier. The membrane structures are ultrasonically welded to the carrier.

GB 2112293 A discloses another filtration apparatus where portions of membranes surrounding holes in the membranes are heat sealed to facing portions of adjacent plates including holes.

Accordingly, it would be desirable to provide a multilayer filtration apparatus which utilizes a plurality of filtration elements wherein the layers are appropriately sealed without the use of adhesive, solvent bonding or direct heat sealing. Moreover, it would be desirable to provide a tangential flow or a dead ended filtration apparatus containing a large number of filtration layers per volume of filtration apparatus which can be formed into a stack and which has packing density of active membrane to external filter volume of at least 300m²/m³. In addition, it would be desirable to provide a tangential flow or a dead ended filtration apparatus containing a large number of filtration layers per volume of filtration apparatus which can be formed into a stack and which can be appropriately sealed to define liquid flow paths within the stack. Furthermore, it would be desirable to provide such a filtration apparatus formed of a material which minimizes or eliminates absorption (also adsorption) and subsequent desorption of a material being filtered. Such a filtration apparatus would provide a high filtration capacity and would permit multiple uses of the apparatus while minimizing or eliminating filtrate contamination problems.

### SUMMARY OF THE INVENTION

The present invention provides a thermoplastic filtration apparatus according to claim 1 having a packing density of at least 300 m² of active membrane area / m³ external volume of filtration apparatus. Preferably, the device is formed of compositions which are substantially free of extractable materials either prior to or subsequent to filtration. As used herein, the phrase "substantially free of extractables" means less than 250 mg of extracted contamination per m2 of material when soaked with a test solution containing one or more acids and then placed into deionized water and allowed to soak to cause any adsorbed or absorbed acid to leach out.

The filtration apparatus is formed of a stack of membranes and spacers that are alternatively positioned through the vertical height of the filtration apparatus and are sealed in a manner more fully described below.

In addition, the present invention provides a filtration apparatus formed of filtration elements that are sealed with a thermoplastic polymeric composition in a manner that promotes sealing to a polymeric porous membrane while avoiding thermal or mechanical degradation of the membrane. Selective sealing of the porous polymeric membrane is effected in a two step process wherein an end of each membrane is sealed with a thermoplastic polymeric composition to secure the thermoplastic polymeric composition to the membrane. Selected layers of thermoplastic polymeric compositions on adjacently positioned membranes then are sealed to each other in order to define fluid flow paths through the stack of alternately positioned membranes and spacer layers. The defined fluid flow paths assure that fluid to be filtered passes through a membrane prior to being removed from the filtration apparatus. Sealing can be effected as a single step wherein a stack of alternately positioned membranes and spacers are subjected to radiant energy which effects heating of selected layers thereby to effect the desired sealing. Alternatively, sealing can be effected of a single set of a membrane and a spacer sequentially until a desired stack of alternately positioned membranes and spacers is sealed in the desired configuration.

In accordance with this invention, a dead ended (NFF) or tangential flow filtration (TFF) apparatus is provided which includes a plurality of spaced-apart membranes and a plurality of spacer layers having channels or openings that promote liquid flow therethrough. The NFF filtration apparatus is provided with at least one feed port and at least one filtrate port. The tangential flow filtration apparatus is provided with at least one feed port, at least one filtrate port and at least one retentate port. Membrane layers and spacer layers are alternated through the vertical height of the filtration apparatus in selected patterns. Selective sealing of the membrane layers and the spacer layers is effected in a two step process. In a first step, a thin layer of a thermoplastic polymeric composition is molded onto end portions of each membrane layer that can comprise a membrane or a composite membrane, such as a membrane supported on a screen layer. The thermoplastic polymer composition is molded in a pattern which effects desired fluid flow through the modules. The thus treated membranes and spacer layers are then stacked in a manner to preliminarily form a feed port, a filtrate port and, in the case of a tangential flow module, a retentate port. The final step of indirect heat sealing of thermoplastic polymeric composition preliminarily sealed to the membrane layers then is selectively effected to form fluid flow channels that separate feed and retentate from filtrate within the module. In the case of a tangential flow filtration apparatus, liquid flow within the stack is assured by sealing the feed inlet and the retentate outlet from the filtrate outlet. The outer portion of the filtration apparatus is then formed by insert molding. Insert molding is accomplished by positioning the stack within an injection mold and injecting the molten polymeric composition into the mold to effect sealing in a manner that assures the desired liquid flow within the final membrane filtration apparatus during use. The spacer layers that accept filtrate are sealed by the plastic composition from a feed port extending into the stack so that the feed must pass through a membrane layer prior to entering a filtrate spacer layer. In addition, the spacer layers adjacent to the feed port that are designated to accept feed remain in liquid communication with the feed channel. Channels that accept either retentate or filtrate also extend into the stack. The channels that accept retentate are sealed from the filtrate spacer layers and are in fluid communication with the spacer layers that are also in fluid communication with the feed port. The channels can extend through the membranes or through thermoplastic tabs that are sealed to at least a portion of the periphery of the membranes. The port or ports that accept filtrate are sealed from the spacer layers that accept feed or retentate and are in fluid communication with the spacer layers that accept filtrate. The stack is also sealed in a manner so that liquid feed entering the feed spacer layers must pass through a membrane before entering a filtrate spacer layer.

### BRIEF DESCRIPTION OF THE DRAWINGS

Fig. 1 is a side view of a modified membrane structure of this invention.
Fig. 2 is a side view of an alternative modified membrane structure of this invention.
Fig. 3 is a side view of an alternative modified membrane structure of this invention.
Fig. 4 illustrates fluid flow through a tangential flow filtration module of this invention.
Fig. 5 illustrates fluid flow through a tangential flow apparatus of this invention.
Fig. 6 is a side view of a modified membrane utilized to form the filtration apparatus of this invention.
Fig. 7 is a side view of two membranes and one spacer layer utilized to form the filtration modules shown in Fig. 8.
Fig. 8 is a side view of filtration modules of this invention.
Fig. 9 is an exploded cross sectional view of filtration and housing elements utilized to form the filtration apparatus of this invention.
Fig. 10 is a cross sectional view illustrating a final position of filtrate elements of this invention prior to a final forming step for the filtration apparatus.
Fig. 11 is a cross sectional view illustrating the final step in forming filtration apparatus of this invention.
Fig. 12 is a perspective view in partial cross-section of a filtration apparatus of this invention.
Fig. 13 is a graph showing the relative extractable levels of a variety of polymeric compositions.
Fig. 14a is a side view of a membrane construction useful for making a filtration module of this invention.
Fig. 14b is a side view of a membrane construction useful for making a filtration module of this invention.
Fig. 14c is a top view of the membrane construction of Figs. 14a and 14b.

### DESCRIPTION OF SPECIFIC EMBODIMENTS

The present invention utilizes filtration membrane elements that can be selectively sealed in a stacked configuration to effect separation of filtrate from feed or feed and retentate. The filtration membrane element comprises a membrane layer having one edge thereof bonded to a thermoplastic polymeric composition. Preferably, the bonded thermoplastic polymeric composition has a top surface and a bottom surface configured so that they converge toward each other and form an end or tip area. The end or tip area is configured so that it absorbs radiant heat energy or a non-heat energy such as ultrasonic energy which is absorbed by the end and converted to heat energy. When exposed to such energy, the end or tip preferentially melts prior to the main body of the thermoplastic polymeric composition. This feature permits control of the direction that the molten thermoplastic polymeric composition flows that, in turn, permits controlling selective areas of a filtration apparatus to be sealed.

The filtration membrane elements can be sealed one-by-one to each other or can be sealed to each other in a desired configuration in a one-step process while positioned in a stack of filtration membrane elements of this invention.

The filtration membrane elements useful for forming the filtration module of this invention are formed by modifying an end of a filtration membrane by sealing a thermoplastic polymeric composition (TPC) to an edge or perimeter of the filtration membrane. The (TPC) surfaces can be sealed to adjacent (TPC) surfaces to effect sealing in a manner that effects sealing of alternatively positioned spacers in a stack of membranes alternating with spacers. Sealing is effected so that any given membrane is sealed on one edge and open on an opposing edge. Adjacently positioned membranes separated by an open layer such as a screen are sealed on opposite edges. This arrangement assures that a feed stream entering an open layer in a stack of membranes passes through a membrane prior to being collected as filtrate. By operating in this manner, mixing of filtrate with either a feed stream or retentate stream is prevented.

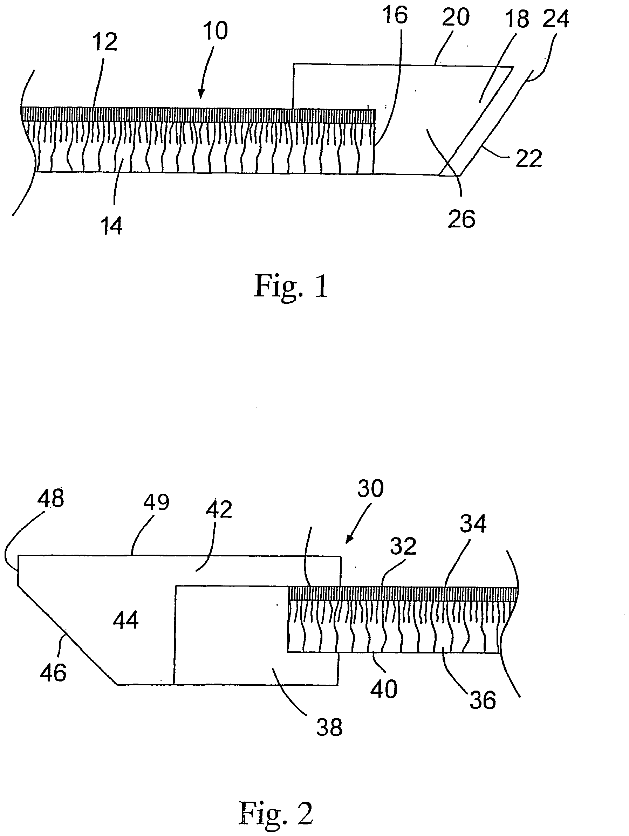

Referring to Fig 1, a modified membrane structure useful for forming the filtration module of this invention is shown when the membrane is an ultrafiltration membrane 10 having a skin 12 and a layer 14 more porous than the skin 12. The end 16 is bonded to a TPC 18 so that the membrane 10 is sealed at the end 16 by the TPC 18. The TPC 18 is configured to have a top surface 20 and a bottom surface 22 which converge to form tip 24. The tip 24 functions to concentrate energy such as radiant or ultrasonic energy to effect melting from tip 24 to the body 26 of the TPC. However, it is to be understood that the TPC need not have converging surfaces and for example, have a flat end or a curved end or the like. A TPC having converging surfaces is preferred since such a surface configuration effectively concentrates radiant or ultrasonic energy at the tip of the TPC.

Referring to Fig. 2, the construction of an alternative filtration module of the present invention utilizing a composite membrane 30 is shown wherein the membrane includes a low porosity skin or tight porous structure 32, a volume 34 having more open pores than skin 32 and a support layer 36 being formed from a more open layer such as spun polypropylene fiber. The composite membrane 30 includes a first molding section 38 that is molded to the bottom surface 40 of composite membrane 30 and a second molding section 42 of composite membrane 30. Second molding section 42 includes bottom surface 46 and top surface 49 which converge into tip area 48. Tip surface 48 preferentially melts when exposed to energy such as radiant heat or ultrasonic energy over the body 44 of the TPC.

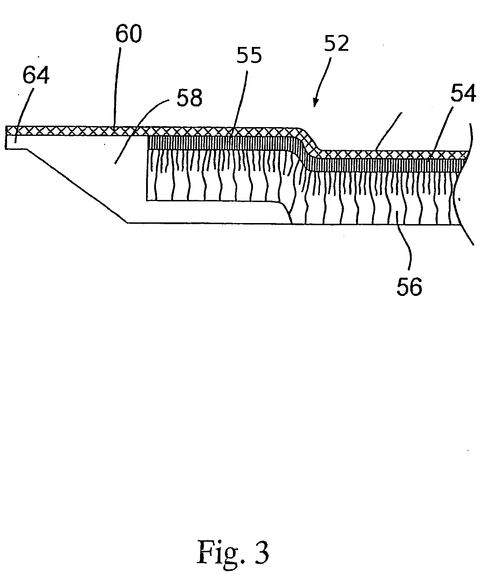

Referring to Fig. 3, an alternative membrane useful for forming the filtration module of this invention is shown wherein a membrane is shown which presents difficulty in bonding to the TPC of choice. The composite membrane 52 includes a skin 55, a porous body 54 and a porous support 56 is bonded to the TPC 58. The skin 55 can be difficult to be bonded by virtue of its composition such as a glycerin filled layer, or by virtue of its low porosity. To improve bonding, a porous screen 60 can be positioned on the top surface of the skin 55 to effect absorption of molten TPC 58, thereby to improve bonding function to skin 55. The tip 64 functions to concentrate energy as described above to effect selective melting of the TPC 58 selectively fuse it to the TPC on adjacent layer. This selective fusion blocks fluid flow past tip 64.

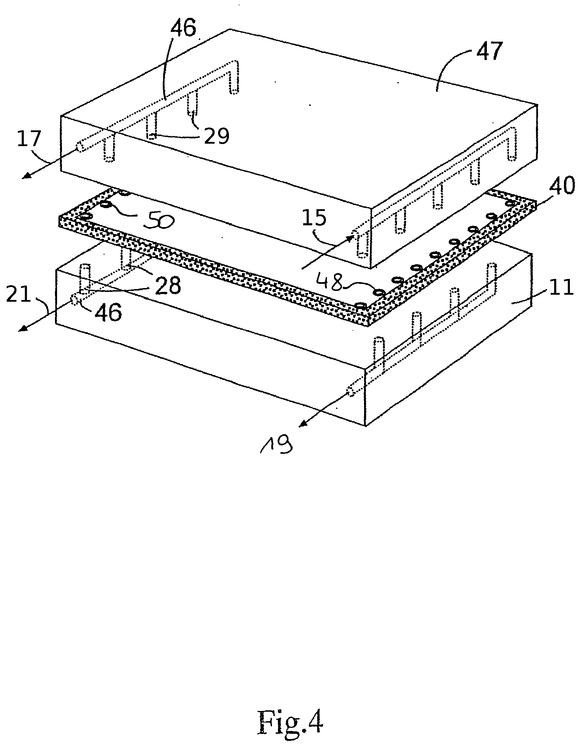

Referring to Fig. 4, a filtration module including the manifold is shown. A filtration element 40 is positioned between manifold 47 and manifold 11. Manifold 47 is provided with feed inlet 15 and filtrate outlets 17. Manifold 11 is provided with filtrate outlet 21 and retentate outlet 19. One set of filtrate outlet means 28 is provided on the manifold 11 while a second set of filtrate outlet means 29 is provided on the manifold 47. The filtrate outlet means 28 and 29 are connected to filtrate outlets 17 and 21 by filtrate conduit paths 46. The filtration element 40 includes holes 48 which communicate with liquid inlet means 15 and holes 50 which communicate with filtrate outlet means 28 and 29.

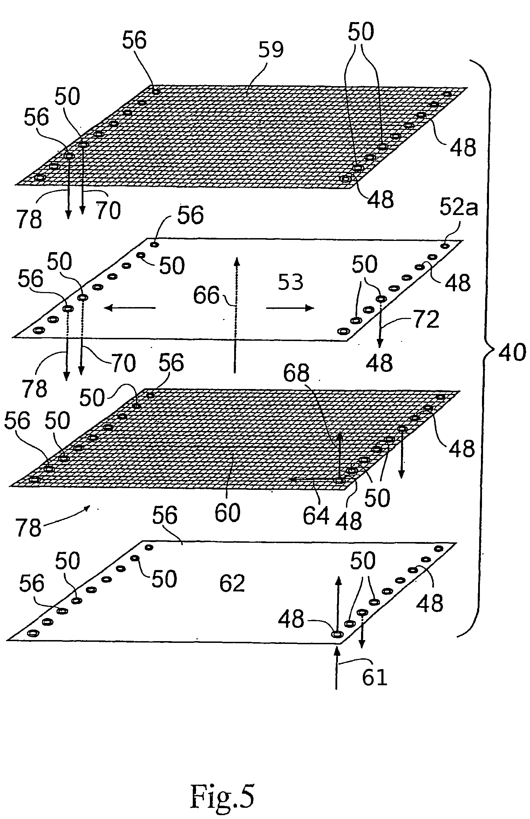

Referring to Fig. 5, the filtration element 40 includes a filtrate spacer 59, a filter layer 53, a retentate spacer 60 and a filter layer 62 with a second filtrate spacer (not shown) and which can contact conduit paths 46 (Fig. 4). The liquid feed represented by arrow 61 passes through holes 48 in layer 62 into spacer 60. A portion of the liquid passes horizontally through spacer 60, as represented by arrow 64 and vertically through filter 53 as represented by arrow 66. The remaining portion of the incoming liquid passes upwardly as represented by arrow 68, through holes 48 in filter layer 53, holes 48 in filtrate spacer 59 and into the next adjacent filtration member (not shown) wherein it proceeds as described above with reference to filtration element 40. The filtrate passes into holes 50 and passes in a direction as shown by arrows 70 and 72 toward filtrate outlet means 21 (Fig. 4). Hole 48 alternates with holes 50. The retentate passes across retentate spacer 60 as represented by arrow 64, through holes 50 and to retentate outlet means 19 (Fig. 4).

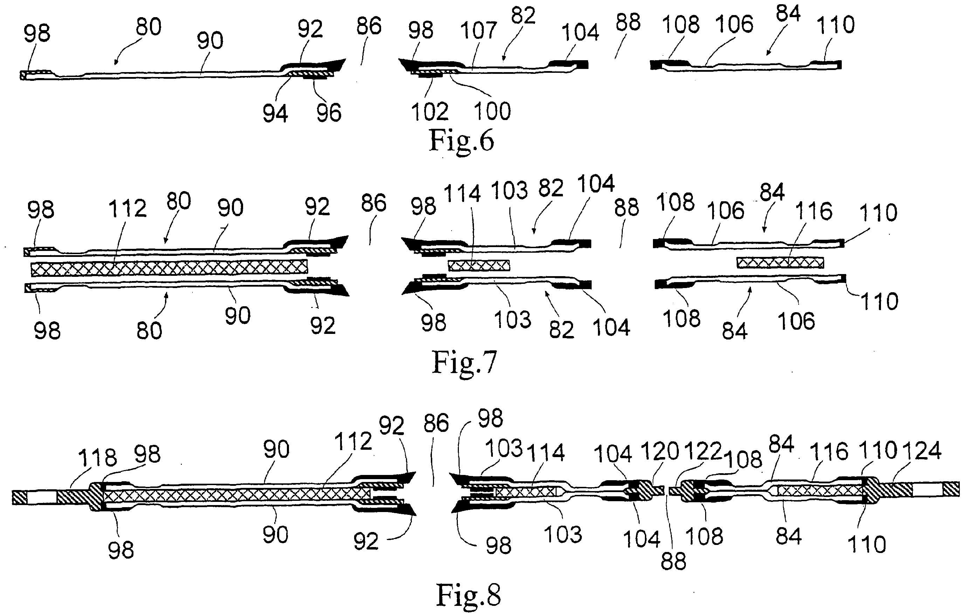

Referring to Fig. 6, a membrane layer of the filtration construction of this invention is formed from membrane elements 80, 82 and 84 which are spaced apart to form a feed port 86 and a permeate port 88. The element 80 is formed from membrane layer 90, a TPC 92, a spacer layer 94, a thermoplastic seal section 96 and a thermoplastic seal section 98. Membrane element 82 is formed from membrane layer 107, thermoplastic seal section 98, spacer layer 100, thermoplastic seal section 102 and thermoplastic seal section 104. Membrane element 84 is formed from membrane layer 106, thermoplastic seal section 108 and thermoplastic seal section 110.

Referring to Fig. 7, a spacer layer 112 is positioned between two membrane elements 80. A spacer layer 114 is positioned between two membrane elements 82. A spacer layer 116 is positioned between two membrane elements 84.

Referring to Fig. 8, thermoplastic seal sections 98 are joined together with a thermoplastic seal 118. Thermoplastic seal sections 104 are joined together with thermoplastic seal 120. Thermoplastic seal sections 108 are joined together with thermoplastic seal 122. Thermoplastic seal sections 110 are joined together with thermoplastic seal 124.

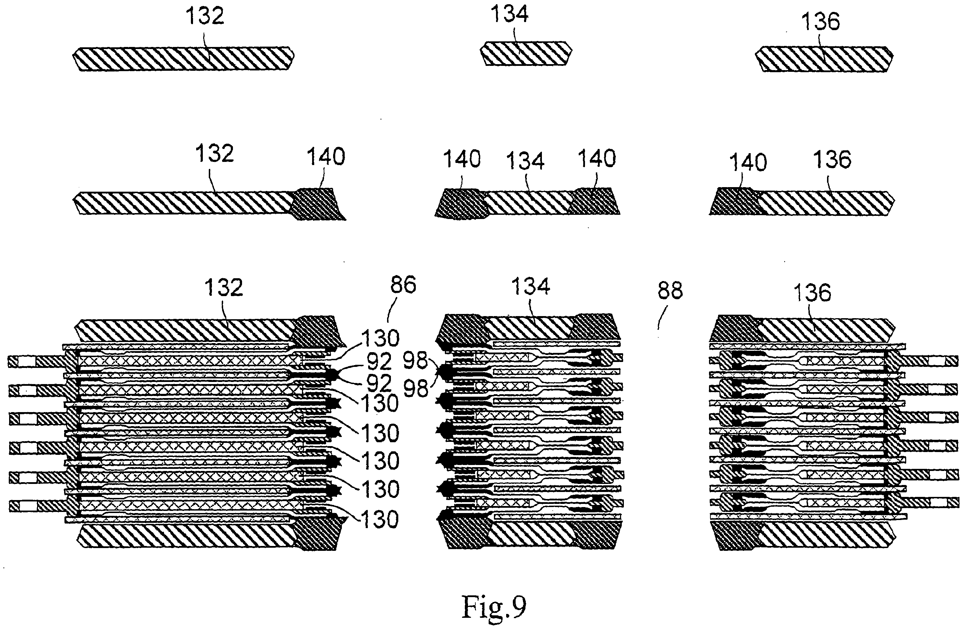

Sealing to the construction of this invention will be described with reference to Figs. 9,10 and 11. A stack of the membrane and spacer elements shown in Fig. 8 are vertically positioned with spacers 130 interposed there between. Thermoplastic endplates 132, 134 and 136 are formed from a thermoplastic material and a resilient thermoplastic elastomer 140. The resilient thermoplastic elastomer 140 is adapted to be sealed such as by heat sealing or ultrasonic bonding to the thermoplastic end plates 132, 134 and 136. Such materials are well known and include SANTOPRENE® polymers, preferably the 8000 series, available from Advanced Elastomer Systems, L.P. of Akron, Ohio and SARLINK® polymers, preferably the 4155 version, a polypropylene thermoplastic elastomer available from DSM Thermoplastic Elastomers, Inc. of Leominster, MA and polypropylene with a blowing agent, (typically from 0.5 to about 2.0%).

In addition, resilient thermoplastic elastomer 140 is positioned to cooperate with a pressure plate (not shown) to exert pressure through the vertical height of the filtration construction of this invention.

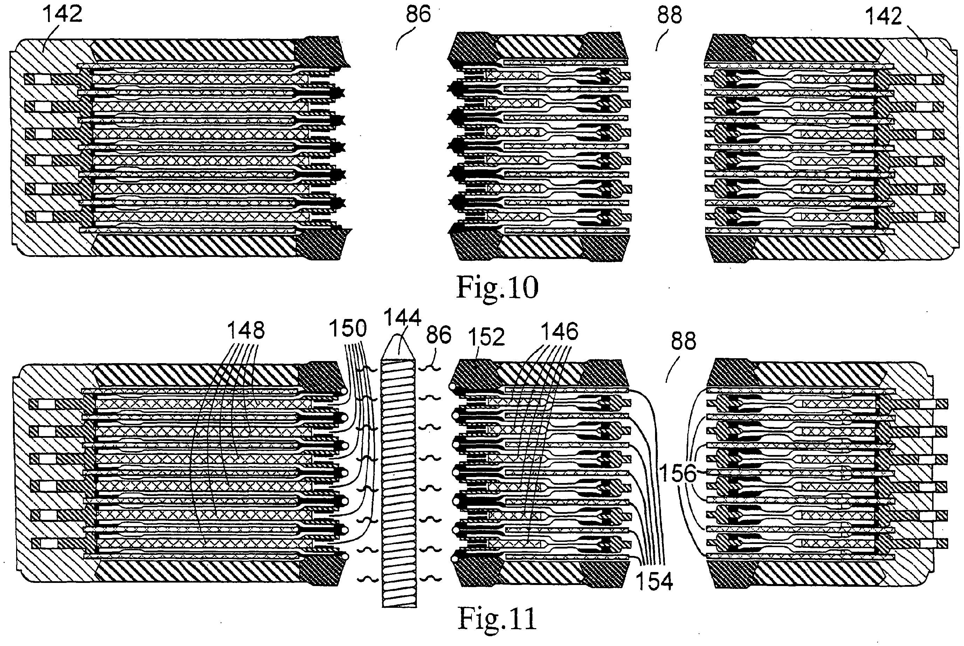

As shown in Fig. 10, the periphery of the stack of membranes and spacers is sealed together with a thermoplastic outer housing 142 by casting or injection molding. In a final step, adjacently positioned thermoplastic constructions 92 and 98 (Fig. 8) are sealed together with radiant seal 144. Sealing means 144 can comprise a radiant seal, an ultrasonic seal or direct contact. Sealing means 144 is positioned sufficiently far from spacers 146 and 148 so as to prevent sealing of openings 150 and 152 so that fluid communication can be effected between conduit 86, spacers 148 and spacers 152. In addition, filtrate conduit 88 is in selective communication with spacers 154 and 156. In this manner, mixing of feed and retentate filtrate is prevented.

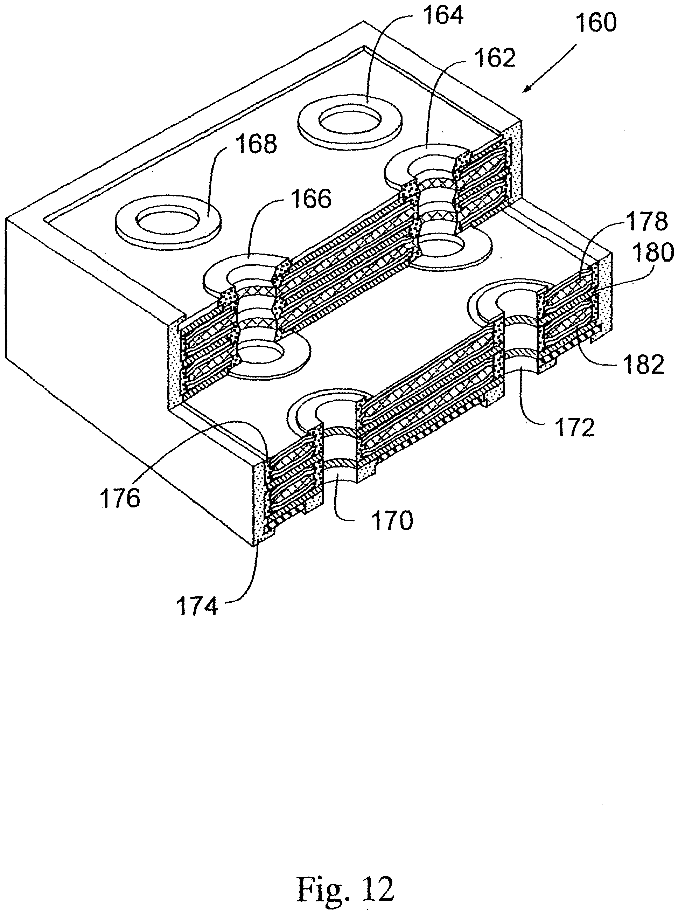

Referring to Fig. 12, the filtration apparatus 160 having inlets 162 and 164 for fluid feed, outlets 166 and 168 for retentate and outlets 170 and 172 for permeate. In Fig. 12, like designed cross-sections refer to the same element. The filtration apparatus 160 includes an outer shell 174, a sealing elastomer 176, a feed screen 178, a permeate screen 180 and a membrane 182.

As can be appreciated, the design of the components of the present invention and the method of sealing them together allows one to use thinner materials for the components than is possible with direct heating sealed devices. It also eliminates the need for adhesives which also impose a minimum thickness between the components. This results in an increase in the number of layers that can be present in a given volume of the filtration module, thereby desirably increasing the filtration capacity of the module. The present invention is capable of providing a packing density of at least 300 square meters (m²) of active_membrane filter area per cubic meter (m³) of external volume of said filter construction, something that has not been available with the prior art devices.

In addition, the components and the process for forming them together is desirable as it can eliminate the need for multiple assembly steps allowing one to assemble a multicomponent device in one step. Alternatively, it allows one to reduce the number of subassemblies and the steps needed to make them as compared to the other known processes and it eliminates the potential for membrane damage as can occur with direct bonding techniques.

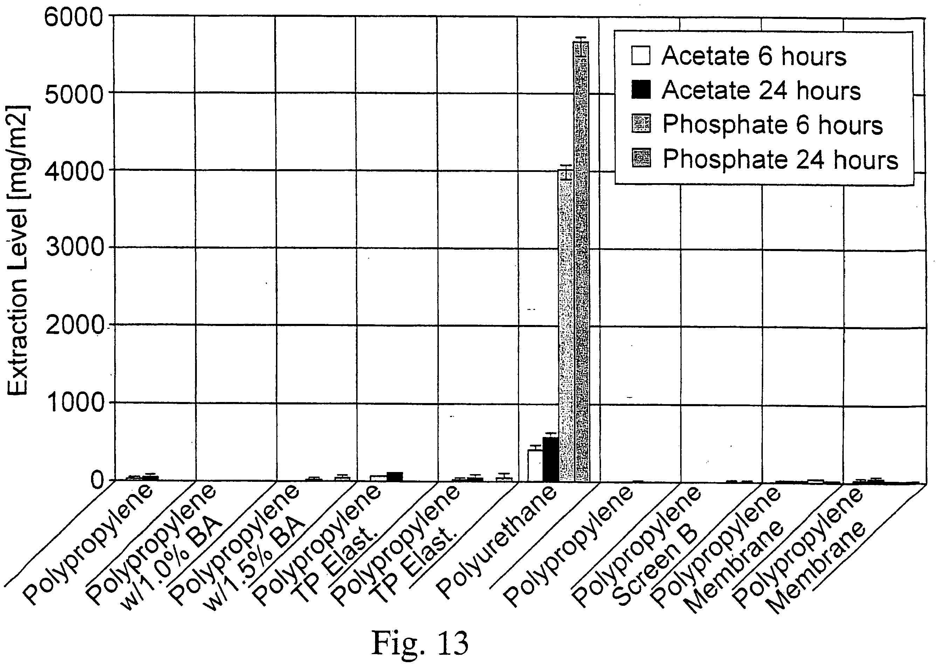

Further, the product of the present invention can have a significantly reduced_level of extractables as compared to devices of the prior art. Referring to Fig. 13, the materials used in the construction of the modules of the present invention as well as the those used in the construction of prior art modules were tested to evaluate their level of extractables with typical cleaning solutions for such devices. The test was conducted to determine the ability of a material to take up or absorb materials and to subsequently release them. In use, this may result in carry over contamination from one batch of product to the next. This phenomenon is commonly referred to in the industry as extractables.

Samples of identical surface area were made from each individual material to be tested were made to produce samples with uniform surface area. For the thermoplastics and thermoset materials, disks of dimensions of 1.125 inch (2.8575 cm) diameter by 0.25 inch (1.27 cm) thickness were molded to produce 0.00185 square meters of surface area. For materials of less than 0.025 inch (1.27 cm) thickness such as the membranes, non-woven supports and screens, the samples were cut into circular disks of 47 mm to produce 0.0035 square meter of surface area.

Each sample was soaked individually in 75ml of the acetic /phosphorous acid test solution for 24 hours. The acid solution used in this study was 1.8% acetic acid and 1.1 % phosphoric acid. After soaking, the samples were briefly rinsed with filtered deionized water to remove any residual solution from the surface of the samples. Each sample was then individually soaked in 50ml of filtered deionized water for extraction. Samples of the water were taken after 6 and 24 hours and analyzed via ion chromatography for the level of acetate and phosphorous ions. The levels of ions were normalized to mg/m². The level of acetate and phosphorous ions present after the described periods of soaking demonstrates the release of residual acid from the material of construction into the water. This corresponds to the level of contamination that the material is capable of releasing in use. Suitable materials are those that have less than 250 mg of extracted contamination per m² of material when tested by the above described test method. More preferred materials and devices made from them had less than 200 mg of extracted contamination per m² of material when tested by the above described test method

The use of polypropylene with or without a blowing agent and polypropylene thermoplastic elastomers provided acceptably low extraction levels while polyurethane (as is used in the prior art modules) did not provide acceptably low extraction levels.

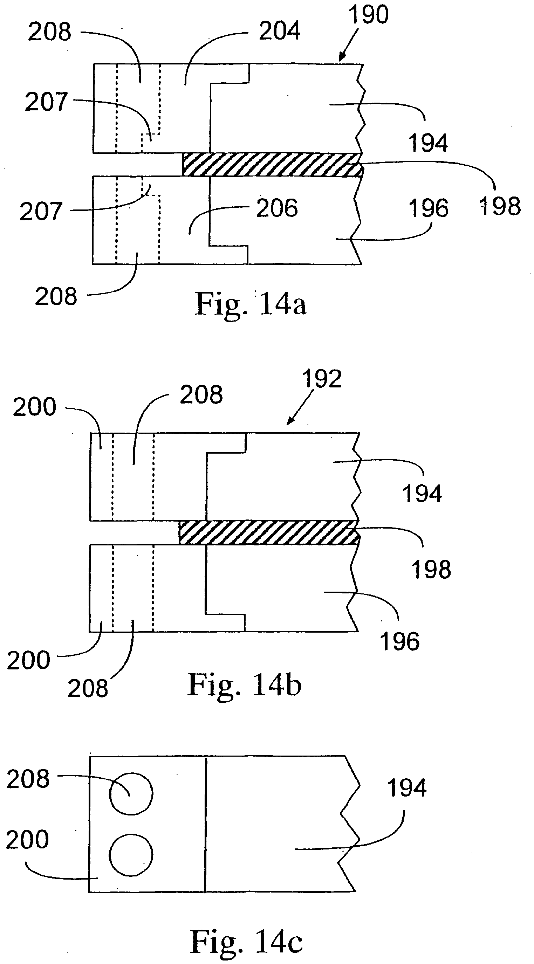

Referring to Figs. 14a, 14b and 14c, an alternative set of filtration elements is shown which can be utilized to form the filtration module of this invention. The filtration elements 190 and 192 are stacked vertically one upon the other in alternate layers. Each filtration element 190 and 192 includes two membranes 194 and 196, a porous screen 198 and two TPC tabs 200 and 202 or 204 and 206. The filtration element 190 includes two TPC tabs 207 which are fused to each other when a heating element (not shown) is extended through the port 208. The heating element is controlled to selectively melt tabs 207 causing them to fuse together. Filtration element 192 is free of tabs 207 and fusion of TPC is not effected by the heating element. Thus, in a stack of alternating filtration elements 190 and 192 alternating passageways for a liquid to pass into a filtration element 192 are provided. The filtration element 192 is provided with TPC tabs on an open end to that shown which the opposing end of filtration element 190 is free of the TPC tabs. Thus, the opposing ends (not shown) of the filtration elements 192 are blocked while the opposing end of filtration element 190 are open to communication with another port (not shown).

## Claims

1. A filtration apparatus having a packing density of at least 300 square meters (m²) of active membrane filter area per cubic meter (m³) of external volume of said filtration apparatus and having a feed inlet port (86;162,164), at least one filtrate port (88), and, if required, at least one retentate port (166,168), wherein said filtration apparatus is made by a process which comprises:
forming a stack of a plurality of fluid permeable spacer layers (112,114,116) and a plurality of membrane filter layers (90,107,106), wherein said spacer layers (112,114,116) are positioned alternately with said filter layers (90,107,106) in a vertical direction and wherein thermoplastic sections in the form of a thermoplastic polymeric composition (TPC;18;58) are preliminarily bonded to said filter layers to each edge of said filter layers extending into said ports in a configuration such that when said sections are melted, sealing of alternately positioned spacer layers in said feed inlet port (86;162,164), said at least one filtrate port (88) and said retentate port (166,168) are effected such that liquid in said at least one filtrate port (88) is not admixed with liquid in said feed inlet port (86;162,164) and in said retentate port (166,168), wherein said thermoplastic polymeric composition (TPC;18;58) preliminarily bonded to the edge of the filter layers has a top surface (20;49) and a bottom surface (22;46) configured so that they converge toward each other and form a tip area (24;48;64) that, when exposed to radiant heat energy or a non-heat energy, absorbs the energy and preferentially melts over a main body (26;44) of the thermoplastic polymeric composition (TPC;18;58), and
indirect heat sealing said thermoplastic sections in said feed inlet port (86;162,164) simultaneously, in one of said at least one permeate ports simultaneously or in said retentate port simultaneously.

2. The filtration apparatus of claim 1 wherein said heating is effected by extending a radiant heating element in one of said ports and energizing said heating elements to effect heating of all of said thermoplastic polymeric compositions in said port.

3. The filtration apparatus of claim 1 or 2 wherein the filtration apparatus is constructed of materials **characterized by** less than 250 mg of extracted contamination per square meter (m²) of wetted material, wherein the extracted contamination level is obtained by soaking the material in a solution of acetic/phosphorous acid test solution for 24 hours, rinsed with filtered deionized water to remove any residual solution from the surface of the samples, then soaked in filtered deionized water for extraction with samples of the water being taken after 6 and 24 hours and analyzed via ion chromatography for the level of acetate and phosphorous ions and the levels of ions detected are normalized to mg/m².

## Patentansprüche

1. Eine Filtrationsvorrichtung mit einer Packungsdichte von mindestens 300 Quadratmetern (m²) aktiver Membranfilterfläche pro Kubikmeter (m³) externen Volumens der Filtrationsvorrichtung und mit einem Einspeisungs-Einlaßanschluss (86;162,164), mindestens einem Filtratanschluss (88) und, wenn nötig, mindestens einem Retentatanschluss (166,168), wobei diese Filtrationsvorrichtung durch ein Verfahren hergestellt ist, welches aufweist:
Bilden eines Stapels aus einer Vielzahl von fluiddurchlässigen Distanzschichten (112,114,116) und einer Vielzahl von Membranfilterschichten (90,107,106), wobei die Distanzschichten (112,114,116) mit den Filterschichten (90,107,106) in einer vertikalen Richtung alternierend angeordnet sind, und wobei thermoplastische Abschnitte in Form einer thermoplastischen Polymeranordnung (TPC;18;58) vorläufig mit den Filterschichten verbunden werden, und zwar mit jedem Rand der Filterschichten und in einer solchen Anordnung in die Anschlüsse hineinreichend, dass, wenn die Abschnitte geschmolzen werden, eine Abdichtung von alternierend angeordneten Distanzschichten in dem Einspeisungs-Einlaßanschluss (86;162,164), dem mindestens einen Filtratanschluss (88) und dem Retentatanschluss (166,168) so bewirkt wird, dass Flüssigkeit in dem mindestens einen Filtratanschluss (88) nicht mit Flüssigkeit in dem Einspeisungs-Einlaßanschluss (86;162,164) und in dem Retentatanschluss (166,168) vermischt wird, wobei die thermoplastische Polymeranordnung (TPC;18;58), welche vorläufig an dem Rand der Filterschichten angefügt wird, eine obere Oberfläche (20;49) und eine untere Oberfläche (22;46) aufweist, die derartig ausgestaltet sind, dass sie zueinander konvergieren und einen Endbereich bilden (24;48;64), der, wenn er einer Strahlungswärmeenergie oder einer nicht-wärme Energie ausgesetzt wird, die Energie absorbiert und gegenüber einem Hauptkörper (26;44) der thermoplastischen Polymeranordnung (TPC;18;58) bevorzugt schmilzt, und
indirektes gleichzeitiges Heißsiegeln der thermoplastischen Abschnitte in dem Einspeisungs-Einlaßanschluss (86;162,164), in einem des/der mindestens einen Permeatanschlusses/ Permeatanschlüsse oder in dem Retentatanschluss.

2. Die Filtrationsvorrichtung gemäß Anspruch 1, wobei die Erhitzung durch Erstrecken eines Strahlungsheizelements in einen der Anschlüsse und Aktivieren des Hitzeelements bewirkt wird, um eine Erhitzung aller thermoplastischen Polymeranordnungen in dem Anschluss zu bewirken.

3. Die Filtrationsvorrichtung gemäß Anspruch 1 oder 2, wobei die Filtrationsvorrichtung aus Materialien aufgebaut ist, die durch weniger als 250mg extrahierter Kontamination pro Quadratmeter (m²) nassen Materials gekennzeichnet sind, wobei das extrahierte Kontaminationsniveau erhalten wird durch Einweichen des Materials in einer Lösung aus Essigsäure/Phosphorsäure-Testlösung für 24 Stunden, Spülen mit gefiltertem deionisiertem Wasser, um Lösungsrückstände von der Oberfläche der Proben zu entfernen, dann Einweichen in filtriertes deionisiertes Wasser zur Extraktion, wobei Proben des Wassers nach 6 und nach 24 Stunden entnommen werden und über Ionenchromatographie analysiert werden, um den Gehalt von Acetaten und phosphorischen Ionen festzustellen, und die Gehalte der festgestellten Ionen auf mg/m² normalisiert werden.

## Revendications

1. Appareil de filtration présentant une densité de tassement d'au moins 300 mètres carrés (m²) de surface active de filtration sur membrane par mètre cube (m³) de volume externe dudit appareil de filtration et ayant un orifice d'admission d'alimentation (86 ; 162, 164), au moins un orifice de filtrat (88), et, si nécessaire, au moins un orifice de rétentat (166, 168), ledit appareil de filtration étant réalisé selon un processus qui comprend le fait de :
former un empilement d'une pluralité de couches d'éléments d'espacement (112, 114, 116) perméables aux fluides et une pluralité de couches de filtre à membrane (90, 107, 106), dans lequel lesdites couches d'éléments d'espacement (112, 114, 116) sont positionnées en alternance avec lesdites couches de filtre (90, 107, 106) dans une direction verticale et dans lequel des sections thermoplastiques sous la forme d'une composition de polymère thermoplastique (TPC ; 18 ; 58) sont préalablement liées auxdites couches de filtre à chaque bord desdites couches de filtre qui s'étendent dans lesdits orifices dans une configuration selon laquelle, lorsque lesdites sections sont fondues, le scellage des couches d'éléments d'espacement positionnées en alternance dans ledit orifice d'admission d'alimentation (86 ; 162, 164), ledit au moins un orifice de filtrat (88) et ledit orifice de rétentat (166, 168) est réalisé de sorte que le liquide dans ledit au moins un orifice de filtrat (88) ne soit pas mélangé avec le liquide dans ledit orifice d'admission d'alimentation (86 ; 162, 164) et dans ledit orifice de rétentat (166, 168), dans lequel ladite composition de polymère thermoplastique (TPC ; 18 ; 58) préalablement liée au bord des couches de filtre présente une surface supérieure (20 ; 49) et une surface inférieure (22 ; 46) configurées de sorte qu'elles convergent l'une vers l'autre et forment une zone de pointe (24 ; 48 ; 64) qui, lorsqu'elle est exposée à une énergie thermique radiante ou à une énergie non-thermique, absorbe l'énergie et, de préférence, se met à fondre sur un corps principal (26 ; 44) de la composition de polymère thermoplastique (TPC ; 18 ; 58), et
thermosceller indirectement lesdites sections thermoplastiques dans ledit orifice d'admission d'alimentation (86 ; 162, 164) simultanément, dans l'un parmi lesdits au moins un orifice de perméat simultanément ou dans ledit orifice de rétentat simultanément.

2. Appareil de filtration de la revendication 1, dans lequel ledit scellage est réalisé par l'extension d'un élément de chauffage radiant dans l'un parmi lesdits orifices et par l'excitation desdits éléments de chauffage afin de réaliser le scellage de toutes lesdites compositions de polymère thermoplastique dans ledit orifice.

3. Appareil de filtration de la revendication 1 ou 2, l'appareil de filtration étant constitué de matériaux **caractérisés par** moins de 250 mg de contamination extraite par mètre carré (m²) de matériau humide, dans lequel le niveau de contamination extraite est obtenu par trempage du matériau dans une solution d'essai d'acide acétique/phosphoreux pendant 24 heures, rinçage à l'eau déminéralisée filtrée pour enlever toute solution résiduelle de la surface des échantillons, ensuite trempage dans de l'eau déminéralisée filtrée pour extraction, des échantillons de l'eau étant pris après 6 et 24 heures et analysés par chromatographie ionique pour le niveau d'ions acétate et phosphore, et les niveaux d'ions détectés sont normalisés au mg/m².
